# EUROPEAN PATENT APPLICATION

(11) **EP 1 675 243 A2**
(43) Date of publication of application: **28.06.2006**
(21) Application number: 05257918.2
(22) Date of filing: 20.12.2005
(51) Int. Cl.: H02G 15/00

(54) **Waterproof bag**

(30) Priority: 24.12.2004 GB 0428287
(71) Applicant: Checkmate UK Limited, Sheerness ME12 1PZ (GB)
(72) Inventor: Prentice, Mark E., Bowerhill Melksham SN12 6TR (GB)
(74) Representative: Copp, David Christopher

(57) **Abstract**

A waterproof bag has a cable gland which provides a waterproof seal where cable pass through a wall of an enclosure has a sleeve 16 through which the cables and their cable connectors can pass. A mouldable, waterproof insert 18 (for example a closed cell foam) fits into the sleeve and has opposed surfaces between which cables 20 can be placed. The insert 18 also has an external circumference no smaller than the internal circumference of the sleeve. A clamp 22,24 fits around the exterior of the sleeve 16 and clamps the sleeve against the insert and the insert against cables located between the opposed surfaces so that the cable or cables are in contact with the insert over their whole circumference and the insert is in contact with the sleeve over the whole circumference of the sleeve.

## Description

This invention relates to a waterproof bag for containing equipment which has to be connected to external devices by cables passing though a wall in the bag. The bag has a cable gland which is intended to prevent moisture or other contaminants from passing through the gland.

Electronic equipment, for example computer or telecommunications equipment, has in certain circumstances to be protected within a container and kept dry and protected against water damage. Such equipment often has to be connected to, disconnected from and reconnected to other pieces of equipment, by electrical signal and power cables, and these cables frequently have terminal fittings permanently fixed to the cable, and of substantially larger dimensions than the cable cross-section.

According to the invention, there is provided a waterproof bag having flexible bag walls, a waterproof closure to the bag through which equipment can be placed inside the bag, and a cable gland in a wall of the bag, the gland providing an aperture through which cables can pass through the wall, the gland having a having a sleeve through which cables and cable connectors can pass, a mouldable, waterproof insert adapted to fit into the sleeve, having opposed smooth surfaces between which cables can be placed and an external circumference no smaller than the internal circumference of the sleeve, and a clamp adapted to fit around the exterior of the sleeve and to clamp the sleeve against the insert and the insert against cables located between the opposed surfaces so that the cable or cables are in contact with the insert over their whole circumference and the insert is in contact with the sleeve over the whole circumference of the sleeve.

In one embodiment, the sleeve is oval in cross-section with a larger cross-sectional dimension and a smaller cross-sectional dimension and means for biasing the plates towards one another across the small cross-sectional dimension of the sleeve.

The sleeve is preferably made of a flexible material, such as urethane or rubber. Elasticity may be desirable but is not essential, as non-elastic but flexible materials such as a rubber or plastic reinforced with cloth could be used. The insert can be compressed to fit in the gland and so will conform to the internal shape of the sleeve as well as to the cross section(s) of the cable(s). When the clamp is applied, the insert will cope with any slight creases in the gland surrounding the insert so liquid ingress would be prevented.

The sleeve can be surrounded by a flange, with the flange being intended to be sealed to a container, so that the sleeve opening registers with an aperture in the container wall, the size of the aperture being at least equal to the internal cross-sectional area of the sleeve. The flange can be moulded integrally with the sleeve.

The insert is preferably a closed cell foam, but other possibilities are a non elastic material like a putty, or Plasticine. Also a very soft material like a urethane could be used. The important thing is that it should be waterproof and soft so it can conform with the cross section(s) of the cable(s) and fit snugly in the surround. The facing surfaces are designed to fit together without leaving any gaps, but are compliant enough to seal around any particular number or diameter of cables. Thus, the gland is not dedicated to any particular number or diameter of cables.

The clamp may comprise two spaced plates which can be biased toward one another from opposite sides of the sleeve, to compress the sleeve against the foam and the foam against cables in the foam. The plates can be biased toward one another for example by bolts passing through both plates, outside the sleeve, or by a suitable spring arrangement. Preferably the cables do not have to be threaded through the clamp.

The invention also extends to a cable gland as set forth above in register with an aperture through a wall of the bag.

The invention will now be further described, by way of example, with reference to the accompanying drawings, in which:
- Figure 1: shows an example of a waterproof bag incorporating part of a cable gland in accordance with the invention;
- Figure 2a: is a detail on a larger scale of the part of the gland shown in Figure 1;
- Figure 2b: shows a foam insert for the gland;
- Figure 3: shows the gland in use, with cables passing through the gland and the gland closed.

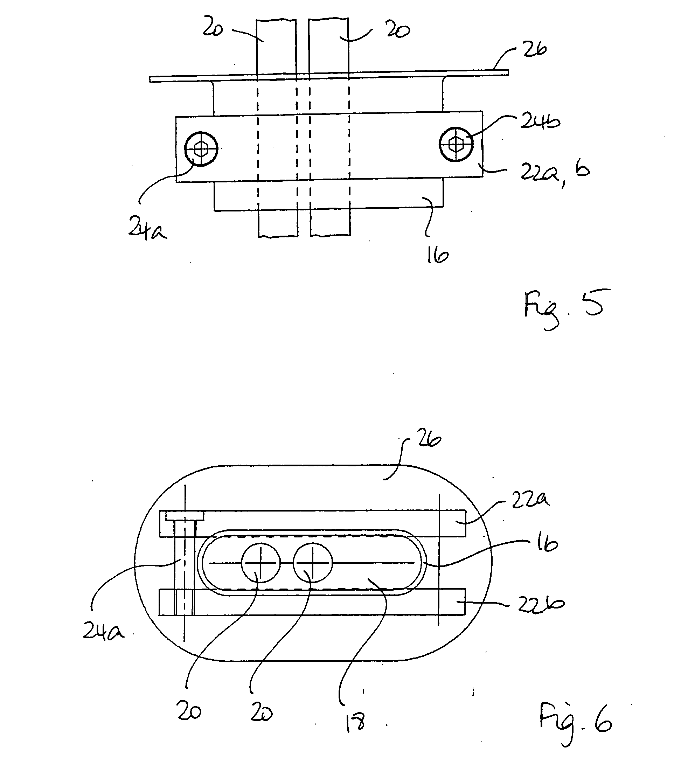

- Figure 4: is a plan view of a gland component;
- Figure 5: is a view corresponding to Figure 4, but showing the gland assembled; and
- Figure 6: is a front view of the assembled gland.

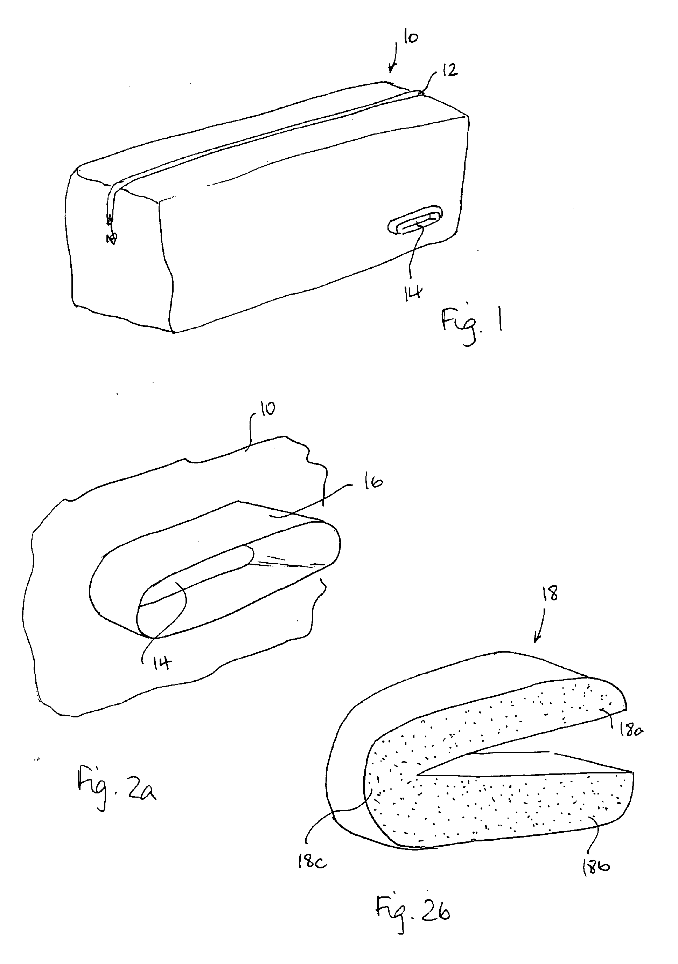

The gland shown in the drawings is intended particularly for use where electrical or electronic equipment has to be protected from water. It is conventional to place such equipment inside a waterproof bag and a suitable bag is shown at 10 in Figure 1. The bag is closed by a waterproof zip 12, but any other type of waterproof bag closure can be used. The bag does however have an opening 14 through which cables can pass to connect components within the bag 10 to other components (which may or may not be in other waterproof enclosures). The size of the opening 14 should be sufficient to allow conventional plugs or cable connectors to pass through the opening without being separated from the cables to which they are connected.

Figure 2 shows a scrap section of the container 10, with a gland sleeve 16 extending externally of the bag and standing out from the bag surface. The sleeve 16 will be made of a rubber or rubber-like material.

A foam insert 18 is used in the sleeve 16 to provide the necessary seal in the gland. In Figures 1 and 2, the sleeve 16 is shown as being substantially oval in cross-section, and the insert 18 has the same general cross-sectional shape. It will however be appreciated that the cross-section does not have to be oval and could take up almost any other shape, preferably shapes without any reentrant portion.

The insert 18 is of closed-cell foam so that it provides a water barrier. It has two halves 18a, 18b which are connected by a connecting region 18c and which form two opposing faces. However, the two parts 18a and 18b could be separate from one another. The opposing faces do not have to be flat.

The external circumferential dimension of the insert 18 should be at least as large as the internal circumference of the sleeve 16, and preferably slightly larger so that it has to be compressed to fit within the sleeve.

In use, all cables which are to pass through the wall of the bag 10 are passed through the sleeve 16. They are then placed between the opposing faces of the insert halves 18a, 18b and the insert is fitted into the sleeve 16. The insert will be suitably compressed as necessary so that it fits within the sleeve 16. Normally the depth of the insert 18 would be substantially the same as the depth of the sleeve 16.

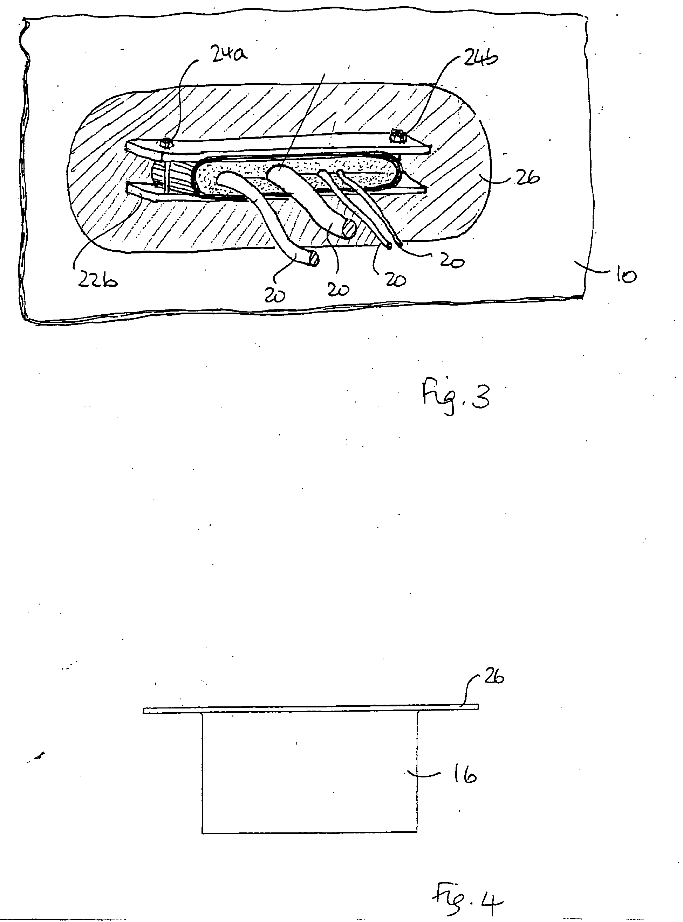

To complete the gland, a clamp is placed around the outside of the sleeve 16 as shown in Figure 3. The clamp comprises two rigid plates 22a, 22b and two bolts 24a and 24b which extend between the plates. As shown in Figure 3 the plates are placed above and below the sleeve 16, and when the bolts 24a and 24b are tightened the sleeve is compressed and the foam insert 18 is pressed against the surface of each of the cables 20, to form a watertight seal around each cable. It will be seen from Figure 3 that the size of the individual cables is immaterial as the nature of the clamp means that a seal will be formed around any cable passing through the foam insert.

The sleeve 16 may be a moulded component, moulded with a flange 26 which can be welded or otherwise sealed to the surface of the bag 10. Typically the depth of the sleeve 16, ie the distance along the length of the sleeve, may be about 50 millimetres.

It is convenient to make the sleeve oval in cross-section because then the clamp plates 22 can be flat. However, other cross-sections, and shaped clamp plates are also possible.

It is of course important that when the bolts 24 are tightened to draw the clamp plates together, there should be no water path through the gland.

Although bolts are shown as the mechanism by which the plates 22 are drawn together to seal the gland, many other methods could be employed to effect the necessary clamping action. The flange 26 can be sealed to the bag wall by any known method which provides a permanent watertight seal.

The invention is particularly envisaged for use with waterproof bags 10 which have flexible walls, but it can also be used on an enclosure with rigid walls.

No sealant or special tools are required to produce a watertight seal around the cables and the cables themselves are easily passed through the gland and the system resealed against water ingress without the need to remove connector plugs or to cut cables.

Various advantages are set out below:
■ The gland obviates the need to modify the cables in any way while enabling them to be used in this special type of waterproof installation.
■ The gland allows cables to be changed easily in the event of their failure or if there is a configuration change.
■ Because the glands can accommodate a varying number of cables, it will not be necessary to fit extra glands if new cables are required.
■ If cables are removed, the glands can be easily blanked off so there is no possibility of water ingress.

## Claims

1. A waterproof bag having flexible bag walls, a waterproof closure to the bag through which equipment can be placed inside the bag, and a cable gland in a wall of the bag, the gland providing an aperture through which cables can pass through the wall, the gland having a having a sleeve through which cables and cable connectors can pass, a mouldable, waterproof insert adapted to fit into the sleeve, having opposed surfaces between which cables can be placed and an external circumference no smaller than the internal circumference of the sleeve, and a clamp adapted to fit around the exterior of the sleeve and to clamp the sleeve against the insert and the insert against cables located between the opposed surfaces so that the cable or cables are in contact with the insert over their whole circumference and the insert is in contact with the sleeve over the whole circumference of the sleeve.

2. A waterproof bag as claimed in Claim 1, wherein the mouldable waterproof insert is a closed cell foam.

3. A waterproof bag as claimed in Claim 1 or Claim 2, wherein the sleeve is oval in cross-section with a larger cross-sectional dimension and a smaller cross-sectional dimension and means for biasing the plates towards one another across the small cross-sectional dimension of the sleeve.

4. A waterproof bag as claimed in any preceding claim, wherein the sleeve is made of rubber.

5. A waterproof bag as claimed in any preceding claim, wherein the sleeve is surrounded by a flange, and the flange is adapted to be sealed to the bag, so that the sleeve opening registers with an aperture in the bag wall, of size at least equal to the cross-sectional area of the sleeve.

6. A waterproof bag as claimed in any preceding claim, wherein the insert is of closed cell foam and has two halves which are connected by a connecting region and which form two opposing faces between which cables can be placed.

7. A waterproof bag substantially as herein described, with reference to the accompanying drawings.

8. A cable gland comprising a sleeve through which cables and cable connectors can pass, a mouldable, waterproof insert adapted to fit into the sleeve, having opposed surfaces between which cables can be placed and an external circumference no smaller than the internal circumference of the sleeve, and a clamp adapted to fit around the exterior of the sleeve and to clamp the sleeve against the insert and the insert against cables located between the opposed surfaces so that the cable or cables are in contact with the insert over their whole circumference and the insert is in contact with the sleeve over the whole circumference of the sleeve.
